# EUROPÄISCHE PATENTSCHRIFT

(11) **EP 2 951 038 B1**
(45) Veröffentlichungstag und Bekanntmachung des Hinweises auf die Patenterteilung: **11.03.2020**
(21) Anmeldenummer: 14701759.4
(22) Anmeldetag: 29.01.2014
(51) Int. Cl.: B60H 1/00, B60H 1/22

(54) **VERFAHREN UND VORRICHTUNG ZUM AUSWÄHLEN EINER ODER MEHRERER HEIZQUELLEN EINES INNENRAUMHEIZSYSTEMS EINES KRAFTFAHRZEUGS**
METHOD AND DEVICE FOR SELECTING ONE OR MORE HEAT SOURCES OF AN INTERIOR HEATING SYSTEM OF A MOTOR VEHICLE
PROCÉDÉ ET DISPOSITIF DE SÉLECTION D'UNE OU DE PLUSIEURS SOURCES DE CHAUFFAGE D'UN SYSTÈME DE CHAUFFAGE DE L'HABITACLE D'UN VÉHICULE AUTOMOBILE

(30) Priorität: 31.01.2013 DE 102013001749
(43) Veröffentlichungstag der Anmeldung: 09.12.2015
(73) Patentinhaber: Volkswagen Aktiengesellschaft, 38440 Wolfsburg (DE)
(72) Erfinder: BEILKE, Ulrik, 38106 Braunschweig (DE); STUKENBROCK, Denis, 04435 Schkeuditz (DE)
(86) Internationale Anmeldenummer: PCT/EP2014/051678
(87) Internationale Veröffentlichungsnummer: WO 2014/118204

(56) Entgegenhaltungen:
- DE-A1- 10 025 713
- DE-A1-102009 044 905
- DE-A1-102011 002 780
- DE-C1- 10 016 694
- US-A- 5 275 012

## Beschreibung

### Technisches Gebiet

Die vorliegende Erfindung betrifft Innenraumheizsysteme sowie Verfahren zum Betreiben von Innenraumheizsystemen.

### Stand der Technik

Bei niedrigen Außentemperaturen ist es in der Regel aus Komfortgründen notwendig, die Luft in einem Fahrgastinnenraum eines Kraftfahrzeugs zu erwärmen. Bei mit Verbrennungsmotoren betriebenen Kraftfahrzeugen wird üblicherweise die Abwärme des Verbrennungsmotors für das Beheizen des Fahrgastinnenraums genutzt. Bei Hybridfahrzeugen, d.h. Kraftfahrzeugen mit einem hybriden Antriebsystem, wird der Verbrennungsmotor jedoch nicht permanent betrieben. Daher werden dort eine oder mehrere zusätzliche Heizquellen, insbesondere in Form einer Elektroheizung, die Wärmeenergie durch direkte Umwandlung von elektrischer Energie erzeugt, und/oder einer Standheizung (Verbrennungsheizung) eingesetzt. Somit stehen in Hybridfahrzeugen mehrere Heizquellen zur Verfügung, aus denen zum Beheizen des Fahrgastinnenraums ausgewählt werden muss.

Aus der Druckschrift EP 0 949 095 A1 ist eine Einrichtung zur Innenraumbeheizung eines Hybridfahrzeugs bekannt. Die Einrichtung sieht vor, zur Beheizung des Fahrgastinnenraums eines Hybridfahrzeugs einen Verbrennungsmotor als erste Wärmequelle und eine zweite Wärmequelle zu nutzen.

Weiterhin offenbart die Druckschrift DE 10 2011 004 831 A1 ein Energiemanagement für ein Kraftfahrzeug mit einem Heiz- oder Klimatisierungssystem.

Dort sind ein elektrischer Heizer und ein Kältemittel-/Kühlmittel-Wärmetauscher als Wärmequellen vorgesehen, zwischen denen umgeschaltet werden kann.

Es ist Aufgabe der vorliegenden Erfindung, ein Verfahren zum Betreiben eines Heizsystems mit mehreren Heizquellen zur Verfügung zu stellen, wobei die Heizquelle, die zum Beheizen des Fahrgastinnenraums genutzt wird, in geeigneter Weise ausgewählt wird.

### Offenbarung der Erfindung

Diese Aufgabe wird durch das Verfahren zum Betreiben eines Heizsystems mit mehreren Heizquellen gemäß Anspruch 1 sowie durch die Vorrichtung, das Heizsystem und das Computerprogrammprodukt gemäß den nebengeordneten Ansprüchen gelöst.

Weitere vorteilhafte Ausgestaltungen der vorliegenden Erfindung sind in den abhängigen Ansprüchen angegeben.

Gemäß einem ersten Aspekt ist ein Verfahren zum Auswählen einer oder mehrerer Heizquellen aus einer Anzahl von Heizquellen zum Erwärmen der Luft in einem Fahrgastinnenraum eines Kraftfahrzeugs vorgesehen. Dabei werden in einem ersten Heizsystemzustand folgende Schritte durchgeführt:
- automatisches Auswählen einer oder mehrerer zu aktivierender Heizquellen, wenn festgestellt wird, dass ein Heizbedarf vorliegt; und
- Aktivieren der ausgewählten einen oder mehreren Heizquellen.

Eine Idee des obigen Verfahrens besteht darin, eine Möglichkeit bereitzustellen, um die Heizquelle, die zum Beheizen eines Fahrgastinnenraums eines Kraftfahrzeugs genutzt wird, aus mehreren Alternativen automatisch auszuwählen. Dadurch ist es möglich, die jeweils geeignete Heizquelle auszuwählen, beispielsweise diejenige Heizquelle, die in der momentanen Situation am effizientesten ist oder für die die meiste nutzbare Energie zur Verfügung steht.

Weiterhin können die eine oder die mehreren zu aktivierenden Heizquellen eine Elektroheizung, eine Kraftstoffheizung oder eine Nutzung von Abwärme eines Antriebsmotors des Kraftfahrzeugs umfassen.

Gemäß einer Ausführungsform kann das automatische Auswählen basierend auf Benutzerparametern und/oder Umgebungsparametern und/oder Fahrzeugparametern durchgeführt werden.

Insbesondere können die Umgebungsparameter eine Außentemperatur, eine Angabe über eine Sonneneinstrahlung, eine Fahrzeugposition, eine Entfernung zu einem Zielort, eine Entfernung zur nächsten Tankstelle oder Aufladestation zusätzlich zu einer Information über eine Wetterprognose umfassen.

Weiterhin können die Fahrzeugparameter eine Kühlmitteltemperatur des Verbrennungsmotors und/oder eine Innentemperatur der Luft im Fahrgastinnenraum und/oder eine Restkapazität eines elektrischen Energiespeichers und/oder einen Tankfüllstand eines Kraftstofftanks und/oder einen Ladezustand, der angibt, ob gerade ein Aufladen erfolgt, und/oder eine Geschwindigkeit des Kraftfahrzeugs umfassen.

Insbesondere können die Benutzerparameter eine Benutzerpräferenz der zu nutzenden Heizquelle, ein benutzerdefiniertes Verbot einer Nutzung einer Heizquelle, so dass diese bei dem automatischen Auswählen unberücksichtigt bleibt, eine Vorgabe einer maximalen Laufzeit einer oder mehrerer der Heizquellen sowie eine Angabe über Benutzungsregeln umfassen.

Gemäß einer weiteren Ausführungsform können die eine oder die mehreren Heizquellen abhängig von den verfügbaren Kapazitäten von die Heizquellen versorgenden Energiespeichern ausgewählt werden.

Es kann vorgesehen sein, dass eine Elektroheizung als Heizquelle ausgewählt wird, wenn festgestellt wird, dass ein die Elektroheizung versorgender elektrischer Energiespeicher innerhalb eines vorbestimmten Zeitraums aufgeladen wird.

Erfindungsgemäß wird die Heizquelle abhängig von einem Wärmebedarf ausgewählt, wobei sich der Wärmebedarf aus der Temperaturdifferenz zwischen einer Wunschtemperatur und einer Ist-Temperatur im Fahrgastinnenraum ergibt und abhängig davon ermittelt wird, welcher zusätzliche wetterbedingte Wärmeenergieeintrag im Verlauf der weiteren Fahrt erfolgen wird.

Gemäß einer Ausführungsform kann die Heizquelle abhängig von der Höhe eines Wärmebedarfs ausgewählt werden.

Es kann vorgesehen sein, dass einem Benutzer eine Eingabemöglichkeit bereitgestellt wird, so dass der Benutzer zwischen dem ersten Heizsystemzustand und einem oder mehreren zweiten Heizsystemzuständen auswählen kann, wobei die zweiten Heizsystemzustände jeweils eine oder mehrere zu aktivierende Heizquellen bestimmen.

Gemäß einem weiteren Aspekt ist eine Vorrichtung, insbesondere eine Heizsystemsteuereinheit, zum Auswählen einer oder mehrerer Heizquellen aus einer Anzahl von Heizquellen zum Erwärmen der Luft in einem Fahrgastinnenraum eines Kraftfahrzeugs gemäß Anspruch 11 vorgesehen, wobei die Vorrichtung ausgebildet ist, um gemäß einem ersten Heizsystemzustand:
- eine oder mehrere zu aktivierende Heizquellen automatisch auszuwählen, wenn festgestellt wird, dass ein Heizbedarf vorliegt; und
- die ausgewählte/n eine oder mehreren Heizquellen zu aktivieren.

Gemäß einer Ausführungsform kann eine Ein-/Ausgabeeinheit vorgesehen sein, um einem Benutzer eine Eingabemöglichkeit zur Auswahl des ersten Heizsystemzustands und eines oder mehrerer zweiter Heizsystemzustände bereitzustellen, wobei die zweiten Heizsystemzustände jeweils eine oder mehrere zu aktivierende Heizquellen bestimmen, wobei die Eingabemöglichkeit umfasst:
- erste und zweite Betätigungselemente, die jeweils dem ersten Heizsystemzustand und dem einen oder den mehreren zweiten Heizsystemzuständen zugeordnet sind, um diese durch entsprechendes Betätigen jeweils zu aktivieren oder zu deaktivieren; oder
- ein drittes Betätigungselement, um durch Betätigen zwischen den Heizsystemzuständen zu wechseln; oder
- einen Drehsteller als Betätigungselement, um anhand von dessen Stellung aus den Heizsystemzuständen auszuwählen.

Gemäß einem weiteren Aspekt ist ein Heizsystem für einen Fahrgastinnenraum eines Kraftfahrzeugs vorgesehen, umfassend:
- mehrere Heizquellen zum Erwärmen der Luft in einem Fahrgastinnenraum eines Kraftfahrzeugs; und
- die obige Vorrichtung.

Gemäß einem weiteren Aspekt ist ein Computerprogrammprodukt vorgesehen, das ein Computerprogramm enthält, das, wenn dieses ausgeführt wird, alle Schritte des obigen Verfahrens durchführt.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figur 1: eine schematische Darstellung eines Kraftfahrzeugs mit verschiedenen Heizquellen;
- Figur 2: eine schematische Darstellung einer Bedienungsmöglichkeit für ein Heizsystem gemäß einer Ausführungsform;
- Figur 3: eine schematische Darstellung einer weiteren Bedienungsmöglichkeit für ein Heizsystem gemäß einer weiteren Ausführungsform;
- Figur 4: eine schematische Darstellung einer weiteren Bedienungsmöglichkeit eines Heizsystems gemäß einer weiteren Ausführungsform; und
- Figur 5: eine schematische Funktionsdarstellung für ein Heizsystemsteuergerät zum Betreiben des Heizsystems.

### Beschreibung von Ausführungsformen

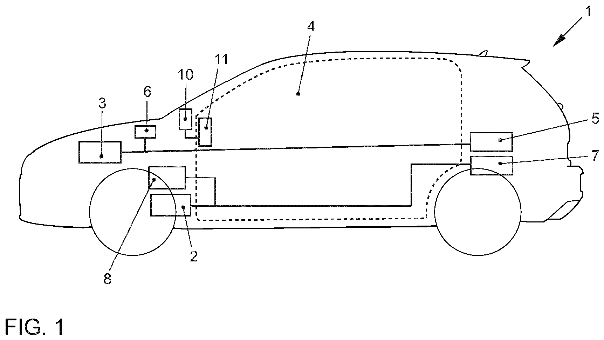

Figur 1 zeigt ein Kraftfahrzeug 1 mit einem hybriden Antriebssystem, das einen Elektroantrieb 2 und einen Verbrennungsmotor 3 umfasst. Sowohl der Elektroantrieb 2 als auch der Verbrennungsmotor 3 können in bekannter Weise einzeln oder gemeinsam ein Antriebsmoment zum Antreiben des Kraftfahrzeugs 1 bereitstellen. In alternativen Ausführungen kann der Verbrennungsmotorantrieb 3 auch als Range-Extender ausgebildet sein. Ein Range-Extender dient lediglich der Bereitstellung von mechanischer Energie, die generatorisch in elektrische Energie zur direkten Nutzung als Antriebsenergie oder zur Speicherung in einem elektrischen Energiespeicher verwendet wird.

Das Kraftfahrzeug 1 weist einen Fahrgastinnenraum 4 auf, der durch verschiedene Heizquellen beheizbar ist. So kann als erste Heizquelle der Verbrennungsmotor 3 genutzt werden. Dem Verbrennungsmotor 3 wird zum Betrieb Kraftstoff aus einem Kraftstofftank 5 zugeführt. Die chemische Energie des Kraftstoffs wird dort in mechanische Energie und Wärmeenergie umgesetzt. Um eine Überhitzung des Verbrennungsmotors 3 zu vermeiden, ist in der Regel ein Kühlsystem (nicht gezeigt) vorgesehen, durch das die Abwärme des Verbrennungsmotors 3 abgeführt wird. Dazu ist ein Kühlmittelkreislauf mit einem durch den Verbrennungsmotor 3 zirkulierenden Kühlmittel vorgesehen. Ein Teil der Abwärme des Verbrennungsmotors 3 kann dem Kühlmittel entzogen und in geeigneter und an sich bekannter Weise der Luft in dem Fahrgastinnenraum 4 zugeführt werden. Die Abwärme des Verbrennungsmotors 3 dient somit zum Beheizen der Luft in dem Fahrgastinnenraum 4.

Der Kraftstofftank 5 kann weiterhin mit einer Standheizung 6 als Kraftstoffheizung verbunden sein, die in dem beschriebenen Ausführungsbeispiel als zweite Heizquelle dient. Die Standheizung 6 kann unabhängig von dem Verbrennungsmotor 3 durch reine Verbrennung von Kraftstoff aus dem Kraftstofftank 5 Wärmeenergie bereitstellen.

Der Elektroantrieb 2 wird mit elektrischer Energie aus einer elektrischen Energiequelle, insbesondere einem elektrischen Energiespeicher 7, wie z. B. einer Batterie oder einer Brennstoffzelleneinheit, betrieben. Der elektrische Energiespeicher 7 kann weiterhin dazu genutzt werden, eine Elektroheizung 8, die elektrische Energie in Wärmeenergie umsetzt, als dritte Heizquelle zu betreiben.

Alle Heizquellen sind separat aktivierbar. Die Standheizung 6 und die Elektroheizung 8 sind ein- und ausschaltbar ausgeführt. Dagegen wird die Wärmeenergie aus dem Kühlsystem als erste Heizquelle beim Betrieb des Verbrennungsmotors 3 zunächst permanent bereitgestellt. Ein Aktivieren der ersten Heizquelle erfolgt dann durch selektives Zuführen der Wärmeenergie aus dem Kühlsystem in den Fahrgastinnenraum 4.

Dazu ist ein Heizsystemsteuergerät 10 vorgesehen, das mit einer Ein-/Ausgabeeinheit 11 verbunden ist, um einem Benutzer eine Eingabemöglichkeit bereitzustellen und um Heizsystemzustände auszugeben.

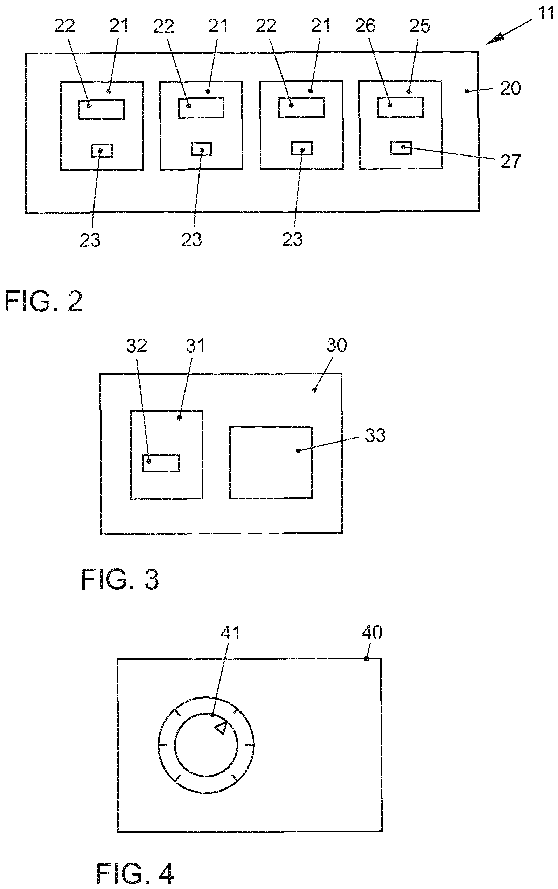

Die Ein-/Ausgabeeinheit 11 kann eine Eingabemöglichkeit für einen Benutzer zur Verfügung stellen, wie sie beispielsweise in Figur 2 dargestellt ist. Figur 2 zeigt eine erste Eingabeeinrichtung 20 mit mehreren ersten Betätigungselementen 21 zum Aktivieren bzw. Deaktivieren einer der Heizquellen 3, 6, 8. Die ersten Betätigungselemente 21 sind jeweils mit einem ersten Symbol 22 versehen, mit dem die durch das betreffende erste Betätigungselement 21 steuerbare Heizquelle 3, 6, 8 identifiziert wird. Die ersten Betätigungselemente 21 können weiterhin eine optische Signalanzeige 23 aufweisen, um anzuzeigen, ob die zugeordnete Heizquelle 3, 6, 8 aktiviert oder deaktiviert ist. Die ersten Betätigungselemente 21 können beispielsweise in Form von Tastern oder Kippschaltern vorgesehen sein.

Im Falle der Ausführung der ersten Betätigungselemente 21 in Form von Tastern kann eine einmalige Betätigung die betreffende Heizquelle 3, 6, 8 aktivieren, so dass die betreffende Heizquelle 3, 6, 8 Wärme an die Luft im Fahrgastinnenraum 4 abgibt. Eine nochmalige Betätigung deaktiviert die zugeordnete Heizquelle 3, 6, 8.

Es kann ein zusätzliches zweites Betätigungselement 25 vorgesehen sein, dem ein Automatikmodus zugeordnet ist. An dem zweiten Betätigungselement 25 ist ein entsprechendes zweites Symbol 26 zur Kennzeichnung des Automatikmodus angeordnet sowie eine entsprechende zweite optische Signalanzeige 27 zur Kennzeichnung, ob der Automatikmodus aktiviert oder deaktiviert ist. Bei Betätigung des zweiten Betätigungselements 25 wird die zweite optische Signalanzeige 27 aktiviert und die ersten optischen Signalanzeigen 23 der Betätigungselemente 21 können deaktiviert werden. Beim Automatikmodus werden, wie nachfolgend beschrieben, die Heizquellen 3, 6, 8 zum Beheizen des Fahrgastinnenraums 4 automatisch gewählt.

In Figur 3 ist eine weitere Eingabemöglichkeit zur Auswahl der Wärmequelle 3, 6, 8 zum Beheizen des Fahrgastinnenraums 4 dargestellt. Eine entsprechende zweite Eingabeeinrichtung 30 umfasst anstelle von mehreren Betätigungselementen nur ein drittes Betätigungselement 31, das mit einem geeigneten dritten Symbol 32 versehen sein kann. Durch Betätigen des dritten Betätigungselements 31 kann zwischen verschiedenen Systemzuständen geschaltet werden. Die Auswahl des Heizsystemzustands wechselt mit jedem Betätigen des Betätigungselements 31. Die Systemzustände können die Deaktivierung aller Heizquellen 3, 6, 8, die einzelne Aktivierung der verschiedenen Heizquellen 3, 6, 8, die gleichzeitige Aktivierung von mehreren der Heizquellen 3, 6, 8 und das Aktivieren des Automatikmodus umfassen. Die getroffene Auswahl des Heizsystemzustands wird durch eine Textanzeige, durch ein Symbol oder in sonstiger Form auf einer Anzeigeeinheit 33 dargestellt.

Wie in Figur 4 dargestellt, kann auch eine dritte Eingabeeinrichtung 40 mit einem Drehsteller 41 als viertes Betätigungselement vorgesehen sein, mit dem je nach Stellung eine Aktivierung einer oder einer Kombination von mehreren Heizquellen 3, 6, 8, ein Ausschalten aller Wärmequellen 3, 6, 8 oder der Automatikmodus ausgewählt werden kann.

Es kann zudem vorgesehen sein, dass die betreffenden Eingabeeinrichtungen 20, 30, 40 auch die Nichtverfügbarkeit von einzelnen Heizquellen 3, 6, 8 signalisieren. So kann beispielsweise die Nichtverfügbarkeit der Elektroheizung 8 signalisiert werden, wenn die Restkapazität des elektrischen Energiespeichers 7 niedrig ist.

Im Ausführungsbeispiel der Figur 2 kann die Nichtverfügbarkeit beispielsweise durch eine bestimmte farbige Beleuchtung der ersten optischen Signalanzeige 23 angegeben werden. Im Ausführungsbeispiel der Figur 3 kann die Nichtverfügbarkeit dagegen durch eine Nichtauswählbarkeit des betreffenden Heizsystemzustands angegeben werden.

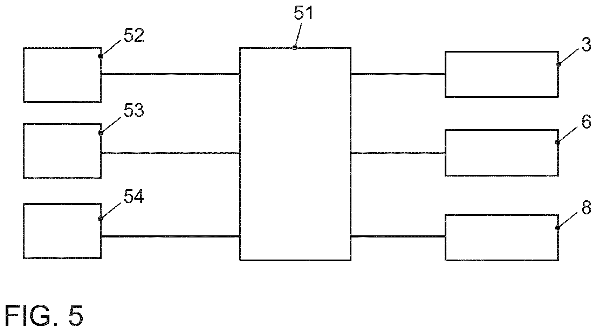

In Figur 5 ist eine schematische Darstellung des Heizsystemsteuergeräts 10 dargestellt. In einem Normalmodus erhält das Heizsystemsteuergerät 10 von der verwendeten Ein-/Ausgabeeinheit 11 eine Angabe über den ausgewählten Heizsystemzustand und aktiviert die eine oder die mehreren ausgewählten Heizquellen 3, 6, 8 entsprechend.

Im Automatikmodus steuert das Heizsystemsteuergerät 10 die Heizquellen 3, 6, 8 so, dass diese unter Berücksichtigung von Benutzervorgaben und Fahrzeugdaten auf effizienteste Weise betrieben werden können. Dazu ist eine Steuerung 51 vorgesehen, die mit den einzelnen Heizquellen 3, 6, 8 verbunden ist, um diese einzeln oder gemeinsam zu aktivieren bzw. zu deaktivieren und gegebenenfalls einen benötigten Wärmebedarf durch Aktivieren einer Heizquelle 3, 6, 8 oder einer Kombination von zwei oder mehr als zwei Heizquellen 3, 6, 8 bereitzustellen. Dazu kann es möglich sein, dass eine der Heizquellen 3, 6, 8 nur zum Bereitstellen einer vorbestimmten Wärmemenge bzw. eines vorbestimmten Anteils der benötigten Wärmemenge angesteuert wird.

Der Steuerung 51 werden über eine Benutzerparametereinheit 52 Benutzerparameter zur Verfügung gestellt. Die Benutzerparameter, die über die Benutzerparametereinheit 52 bereitgestellt werden, können eine oder mehrere der folgenden Angaben umfassen:
- eine Wunschtemperatur der Luft im Fahrgastinnenraum 4;
- eine Benutzerpräferenz der zu nutzenden Heizquelle 3, 6, 8;
- ein benutzerdefiniertes Verbot einer Nutzung einer Heizquelle 3, 6, 8;
- eine Vorgabe einer maximalen Laufzeit einer oder mehrerer der Heizquellen 3, 6, 8; und
- eine Angabe über Benutzungsregeln, beispielsweise gesetzliche Vorgaben, wie z. B. dass im Parkzustand des Kraftfahrzeugs 1 der Verbrennungsmotor 3 nicht zur Heizung genutzt werden darf.

Weiterhin können über eine Umgebungsparametereinheit 53 Umgebungsparameter bereitgestellt werden. Die Umgebungsparameter können eine oder mehrere der folgenden Angaben umfassen:
- eine Außentemperatur;
- eine Angabe zu einer Sonneneinstrahlung;
- eine Fahrzeugposition;
- eine Entfernung zu einem Zielort;
- eine Entfernung zu einer nächsten Tankstelle oder Aufladestation; zusätzlich zu den erfindungsgemäßen Informationen über eine Wetterprognose.

Mithilfe einer Fahrzeugparametereinheit 54 werden der Steuerung 51 Fahrzeugparameter bereitgestellt. Die Fahrzeugparameter können eine oder mehrere der folgenden Angaben umfassen:
- eine Kühlmitteltemperatur des Verbrennungsmotors 3;
- eine Ist-Temperatur der Luft im Fahrgastinnenraum 4;
- eine Restkapazität des elektrischen Energiespeichers 7;
- einen Tankfüllstand des Kraftstofftanks 5;
- einen Ladezustand, der angibt, ob gerade ein Aufladen erfolgt;
- eine Fahrzeuggeschwindigkeit; und
- ein gewähltes Fahrprofil bzw. ein gewähltes Energieprofil, wie z.B. die Einstellung eines sportlichen, normalen oder energiesparenden Fahrzeugbetriebs.

Die Steuerung 51 steuert die Heizquellen 3, 6, 8 basierend auf den Benutzerparametern, Umgebungsparametern und Fahrzeugparametern im Automatikmodus automatisch an. Insbesondere ermittelt die Steuerung 51 anhand der Benutzerparameter, Umgebungsparameter und Fahrzeugparameter und/oder anhand von Benutzereingaben, ob ein Heizbedarf vorliegt.

Gemäß einer Ausführungsform kann basierend auf der Innenraumtemperatur des Fahrgastinnenraums 4 und der vom Benutzer eingegebenen Wunschtemperatur in der Steuerung 51 zunächst der Wärmebedarf ermittelt werden. Anschließend kann abhängig von dem ermittelten Wärmebedarf diejenige Heizquelle 3, 6, 8 ausgewählt werden, mit der sich der Wärmebedarf am effizientesten bereitstellen lässt. Insbesondere kann beim Betrieb des Verbrennungsmotors 3 zumindest ein Teil der benötigten Wärmeenergie von dem Kühlsystem erhalten werden. Wird keine Heizung im Fahrgastinnenraum 4 benötigt, so werden alle Heizquellen 3, 6, 8 deaktiviert.

Weiterhin kann beispielsweise die Auswahl des Bereitstellens der Wärmeenergie durch Aktivieren der Standheizung 6 oder der Elektroheizung 8 abhängig von dem Kraftstofffüllstand im Kraftstofftank 5 und abhängig von dem Ladezustand des elektrischen Energiespeichers 7 ausgewählt werden. Bei einer niedrigen Restkapazität des elektrischen Energiespeichers 7 (Restkapazität kleiner als ein vorgegebener Restkapazitätsschwellenwert) kann die Wärmeenergie eher über die Standheizung 6 und bei einem niedrigen Kraftstofffüllstand (Kraftstofffüllstand niedriger als ein Kraftstofffüllstandsschwellenwert) im Kraftstofftank 5 eher über die Elektroheizung 8 bereitgestellt werden. Insbesondere kann die Auswahl zwischen der Standheizung 6 und der Elektroheizung 8 in Abhängigkeit davon erfolgen, ob die prozentuale Restkapazität oder der prozentuale Kraftstofffüllstand höher ist.

Insbesondere kann abhängig von Betriebsvorgaben sichergestellt sein, dass ein Beheizen des Fahrgastinnenraums 4 nicht während einer Warmlaufphase des Verbrennungsmotors 3 erfolgen darf.

Darüber hinaus kann eine Auswahl der Elektroheizung 8 als Heizquelle dann durchgeführt werden, wenn bei einer Batterie als elektrischer Energiespeicher 7 mit einem baldigen Aufladen zu rechnen ist, entweder weil das Kraftfahrzeug 1 sich bereits nahe an seinem Zielort oder nahe einer Aufladestation befindet.

Insbesondere kann bei den hierin beschriebenen Maßnahmen zur Auswahl einer geeigneten Heizquelle ein von einem Benutzer vorgegebenes Verbot der Nutzung einer oder mehrerer der Heizquellen 3, 6, 8 berücksichtigt werden.

Somit kann nur aus den Heizquellen 3, 6, 8 ausgewählt werden, die vom Benutzer nicht als verbotene Heizquelle 3, 6, 8 gekennzeichnet wurden.

Erfindungsgemäß erfolgt die Auswahl der Heizquelle 3, 6, 8 abhängig von dem tatsächlichen Wärmebedarf Der tatsächliche Wärmebedarf ermittelt sich aus der Temperaturdifferenz zwischen der Wunschtemperatur und der Ist-Temperatur im Fahrgastinnenraum 4 sowie abhängig davon, welcher zusätzliche Wärmeenergieeintrag, beispielsweise durch Sonneneinstrahlung und dergleichen, erfolgt bzw. im Verlauf der weiteren Fahrt erfolgen wird. Dies wird erfindungsgemäß durch Auswerten der Information über die Wetterprognose bestimmt, indem Tageszeit- und Wetterinformationen genutzt werden.

Zudem kann ein Heizen bei einem geringen Wärmeenergiebedarf, d. h. einem Wärmeenergiebedarf unterhalb eines bestimmten vorgegebenen Wärmebedarfsschwellenwerts, durch Aktivieren der Elektroheizung 8 und bei einem höheren Wärmeenergiebedarf, d. h. einem Wärmeenergiebedarf oberhalb des vorgegebenen Wärmebedarfsschwellenwerts, durch Aktivieren der Standheizung 6 erfolgen. Befindet sich das Kraftfahrzeug 1 im reinen Elektrobetrieb, d. h. der Verbrennungsmotor 3 ist abgeschaltet, so kann nicht auf die Abwärme des Verbrennungsmotors 3 als Heizquelle zurückgegriffen werden. Stattdessen kann die Steuerung 51 je nach Energieverfügbarkeit, d. h. je nach dem Kraftstofffüllstand im Kraftstofftank 5 und der Restkapazität des elektrischen Energiespeichers 7, die Standheizung 6 bzw. die Elektroheizung 8 auswählen.

Wird abgesehen davon eine niedrige Restkapazität des elektrischen Energiespeichers 7 festgestellt, während sich das Kraftfahrzeug 1 im Elektrobetrieb befindet, so kann durch Aktivieren des Verbrennungsmotors 3 der elektrische Energiespeicher 7 aufgeladen und gleichzeitig der Verbrennungsmotor 3 als Wärmequelle für die Beheizung des Fahrgastinnenraums 4 verwendet werden.

Befindet sich weiterhin das Kraftfahrzeug 1 an einer Aufladestation und ist in Verbindung mit einer externen elektrischen Energiequelle, so kann der vollständige Wärmeenergiebedarf über die Elektroheizung 8 bereitgestellt werden.

### Bezugszeichenliste

- 1: Kraftfahrzeug
- 2: Elektroantrieb
- 3: Verbrennungsmotor
- 4: Fahrgastinnenraum
- 5: Kraftstofftank
- 6: Standheizung
- 7: elektrischer Energiespeicher
- 8: Elektroheizung
- 10: Heizsystemsteuereinheit
- 11: Ein-/Ausgabeeinheit
- 20: erste Eingabeeinrichtung
- 21: erstes Betätigungselement
- 22: erstes Symbol
- 23: erste optische Signalanzeige
- 25: zweites Betätigungselement
- 26: zweites Symbol
- 27: zweite optische Signalanzeige
- 30: zweite Eingabeeinrichtung
- 31: drittes Betätigungselement
- 32: drittes Symbol
- 33: Anzeigeeinheit
- 40: dritte Eingabeeinrichtung
- 41: viertes Betätigungselement
- 51: Steuerung
- 52: Benutzerparametereinheit
- 53: Umgebungsparametereinheit
- 54: Fahrzeugparametereinheit

## Patentansprüche

1. Verfahren zum Auswählen einer oder mehrerer Heizquellen (3, 6, 8) aus einer Anzahl von Heizquellen (3, 6, 8) zum Erwärmen der Luft in einem Fahrgastinnenraum (4) eines Kraftfahrzeugs (1), wobei in einem Heizsystemzustand folgende Schritte durchgeführt werden:
- automatisches Auswählen einer oder mehrerer zu aktivierender Heizquellen (3, 6, 8), wenn festgestellt wird, dass ein Heizbedarf vorliegt; und
- Aktivieren der ausgewählten einen oder mehreren Heizquellen (3, 6, 8),
wobei die Heizquelle (3, 6, 8) abhängig von einem Wärmebedarf ausgewählt wird, wobei sich der Wärmebedarf aus der Temperaturdifferenz zwischen einer Wunschtemperatur und einer Ist-Temperatur im Fahrgastinnenraum (4) ergibt **dadurch gekennzeichnet, dass**:
der Wärmebedarf abhängig davon ermittelt wird, welcher zusätzliche wetterbedingte Wärmeenergieeintrag im Verlauf der weiteren Fahrt erfolgen wird.

2. Verfahren nach Anspruch 1, wobei die eine oder die mehreren zu aktivierenden Heizquellen (3, 6, 8) aus einer Elektroheizung (8), einer Kraftstoffheizung (6) oder der Nutzung von Abwärme eines Antriebsmotors (3) des Kraftfahrzeugs (1) ausgewählt sind.

3. Verfahren nach Anspruch 1 oder 2, wobei das automatische Auswählen basierend auf Benutzerparametern und/oder Umgebungsparametern und/oder Fahrzeugparametern durchgeführt wird.

4. Verfahren nach Anspruch 3, wobei die Umgebungsparameter einen oder mehrere der folgenden Parameter umfassen:
- eine Außentemperatur;
- eine Sonneneinstrahlung;
- eine Fahrzeugposition;
- eine Entfernung zu einem Zielort;
- eine Entfernung zu einer nächsten Tankstelle oder Aufladestation; und.

5. Verfahren nach Anspruch 3 oder 4, wobei die Fahrzeugparameter einen oder mehrere der folgenden Parameter umfassen:
- eine Kühlmitteltemperatur des Verbrennungsmotors (3);
- eine Innentemperatur der Luft im Fahrgastinnenraum (4);
- eine Restkapazität eines elektrischen Energiespeichers (7);
- einen Tankfüllstand eines Kraftstofftanks (5);
- einen Ladezustand, der angibt, ob gerade ein Aufladen erfolgt;
- eine Fahrzeuggeschwindigkeit; und
- ein Fahrprofil.

6. Verfahren nach einem der Ansprüche 3 bis 5, wobei die Benutzerparameter einen oder mehrere der folgenden Parameter umfassen:
- eine Benutzerpräferenz der zu nutzenden Heizquelle (3, 6, 8);
- ein benutzerdefiniertes Verbot einer Nutzung einer Heizquelle (3, 6, 8), so dass diese bei dem automatischen Auswählen unberücksichtigt bleibt;
- eine Vorgabe einer maximalen Laufzeit einer oder mehrerer der Heizquellen (3, 6, 8); und
- eine Angabe über Benutzungsregeln.

7. Verfahren nach einem der Ansprüche 1 bis 6, wobei die eine oder die mehreren Heizquellen (3, 6, 8) abhängig von den verfügbaren Kapazitäten der die Heizquellen (3, 6, 8) versorgenden Energiespeicher (5, 7) ausgewählt werden.

8. Verfahren nach einem der Ansprüche 1 bis 7, wobei eine Elektroheizung (8) als Heizquelle (3, 6, 8) ausgewählt wird, wenn festgestellt wird, dass ein die Elektroheizung (8) versorgender elektrischer Energiespeicher (7) innerhalb eines vorbestimmten Zeitraums aufgeladen wird.

9. Verfahren nach einem der Ansprüche 1 bis 8, wobei die Heizquelle (3, 6, 8) abhängig von der Höhe eines Wärmebedarfs ausgewählt wird.

10. Verfahren nach einem der Ansprüche 1 bis 9, wobei einem Benutzer eine Eingabemöglichkeit bereitgestellt wird, so dass der Benutzer zwischen dem ersten Heizsystemzustand und einem oder mehreren zweiten Heizsystemzuständen auswählen kann, wobei die zweiten Heizsystemzustände jeweils eine oder mehrere zu aktivierende Heizquellen bestimmen.

11. Vorrichtung, insbesondere eine erste Recheneinheit, zum Auswählen einer oder mehrerer Heizquellen (3, 6, 8) aus einer Anzahl von Heizquellen (3, 6, 8) zum Erwärmen der Luft in einem Fahrgastinnenraum (4) eines Kraftfahrzeugs (1), wobei die Vorrichtung ausgebildet ist, um gemäß einem ersten Heizsystemzustand:
- eine oder mehrere zu aktivierende Heizquellen (3, 6, 8) automatisch auszuwählen, wenn festgestellt wird, dass ein Heizbedarf vorliegt; und
- die ausgewählte/n eine oder mehreren Heizquellen (3, 6, 8) zu aktivieren,
wobei die Vorrichtung ferner ausgebildet ist, um die Heizquelle (3, 6, 8) abhängig von einem Wärmebedarf auszuwählen, wobei sich der Wärmebedarf aus der Temperaturdifferenz zwischen einer Wunschtemperatur und einer Ist-Temperatur im Fahrgastinnenraum (4) ergibt **dadurch gekennzeichnet, dass**:
der Wärmebedarf abhängig davon ermittelt wird, welcher zusätzliche wetterbedingte Wärmeenergieeintrag im Verlauf der weiteren Fahrt erfolgen wird.

12. Vorrichtung nach Anspruch 11, wobei eine Ein-/Ausgabeeinheit (11) vorgesehen ist, um einem Benutzer eine Eingabemöglichkeit zur Auswahl des ersten Heizsystemzustands und eines oder mehrerer zweiter Heizsystemzustände bereitzustellen, wobei die zweiten Heizsystemzustände jeweils eine oder mehrere zu aktivierende Heizquellen (3, 6, 8) bestimmen, wobei die Eingabemöglichkeit umfasst:
- erste und zweite Betätigungselemente (21), die dem ersten Heizsystemzustand und dem einen oder den mehreren zweiten Heizsystemzuständen zugeordnet sind, um diese jeweils durch entsprechendes Betätigen zu aktivieren oder zu deaktivieren; oder
- ein drittes Betätigungselement (31), um durch Betätigen zwischen den Heizsystemzuständen zu wechseln; oder
- einen Drehsteller als Betätigungselement, um anhand von dessen Stellung aus den Heizsystemzuständen auszuwählen.

13. Heizsystem für einen Fahrgastinnenraum (4) eines Kraftfahrzeugs (1), umfassend:
- mehrere Heizquellen (3, 6, 8) zum Erwärmen der Luft in einem Fahrgastinnenraum (4) eines Kraftfahrzeugs (1); und
- die Vorrichtung nach Anspruch 11 oder 12.

14. Computerprogrammprodukt, das ein Computerprogramm enthält, das, wenn dieses ausgeführt wird, alle Schritte eines Verfahrens nach einem der Ansprüche 1 bis 10 durchführt.

## Claims

1. Process for selecting one or more heat sources (3, 6, 8) from a quantity of heat sources (3, 6, 8) for heating the air in a passenger compartment (4) of a motor vehicle (1), wherein in a heat system state, the following steps are carried out:
- Automatic selection of one or more heat sources (3, 6, 8) to be activated, if it is established that there is a requirement for heat; and
- activating the selected one or more heat sources (3, 6, 8),
wherein the heat source (3, 6, 8) is selected independently of a heat requirement,
wherein the heat requirement produced from the temperature difference between a desired temperature and an actual temperature (4) is **characterised in that**:
the heat requirement
is determined regardless of which additional weather-conditioned heat energy input occurs in the course of the ongoing trip.

2. Process according to claim 1, wherein the one or more heat sources (3, 6, 8) to be activated are selected from electrical heating (8), fuel heating (6) or usage of waste heat from a drive motor (3) of the motor vehicle (1) .

3. Process according to claim 1 or 2, wherein the automatic selection is made based on the user parameters and/or the ambient parameters and/or vehicle parameters.

4. Process according to claim 3, wherein the ambient parameters comprise one or more of the following parameters:
- an external temperature;
- solar radiation;
- a vehicle position;
- a distance from a destination;
- a distance to a next service station or charging station; and

5. Process according to claim 3 or 4, wherein the vehicle parameters comprise one or more of the following parameters:
- a coolant temperature of the combustion engine (3);
- an internal temperature of the air in the passenger compartment (4);
- a residual capacity of an electrical energy store (7) ;
- a tank fill level of a fuel tank (5);
- a charging state that indicates whether charging is done straight away;
- a vehicle speed; and
- a trip profile.

6. Process according to one of claims 3 to 5, wherein the user parameters comprise one or more of the following parameters:
- a user preference for the heat source (3, 6, 8) to be used;
- a user-defined prohibition from using a heat source (3, 6, 8), so that this remains unconsidered in the automatic selection;
- a specification of a maximum runtime of one or more heat sources (3, 6, 8); and
- a specification by usage rules.

7. Process according to any one of claims 1 to 6, wherein one or more heat sources (3, 6, 8) are selected independently of the available capacities of the energy store (5, 7) supplying the heat sources (3, 6, 8).

8. Process according to any one of claims 1 to 7, wherein an electrical heating system (8) is selected as a heat source (3, 6, 8), if it is established that an electrical energy store (7) supplying the electrical heating system (8) is charged within a predetermined period.

9. Process according to any one of claims 1 to 8, wherein the heat source (3, 6, 8) is selected independent of the level of a heat requirement.

10. Process according to any one of claims 1 to 9, wherein a user is provided with a usage opportunity so that the user can select between the first heating system state and one or more second heating system states, wherein the second heating system states respectively determine one or more heat sources to be activated.

11. Device, particularly a first computer unit, for selecting one or more heat sources (3, 6, 8) from a quantity of heat sources (3, 6, 8) for heating the air in a passenger compartment (4) of a motor vehicle (1), wherein the device is formed, according to a first heating system state:
- to select one or more heat sources (3, 6, 8) to be activated automatically, if it is established that there is a heat requirement; and
- the selected one or more heat sources (3, 6, 8) are to be activated,
wherein the device is furthermore formed to select the heat source (3, 6, 8)
independently of a heat requirement, wherein the heat requirement
is produced from the temperature difference between a desired temperature
and an actual temperature (4) **characterised in that**:
the heat requirement is determined regardless of which additional weather-conditioned heat energy input occurs in the course of the ongoing trip.

12. Device according to claim 11, wherein an input/output unit (11) is provided to supply to a user a usage possibility of selecting the first heating system state and one or more second heating system states, wherein the second heating system states respectively determine one or more heat sources (3, 6, 8) to be activated, wherein the usage possibility comprises:
- first and second operating elements (21) that are allocated to the first heating system state and one or more second heating system states, to activate or deactivate this respectively by corresponding activation; or
- a third operating element (31); to change between the heating system states by activation; or
- a rotary switch as operating element, to select from the heating system states on the basis of its position.

13. Heating system for a passenger compartment (4) of a motor vehicle (1), comprising:
- several heat sources (3, 6, 8) for heating the air in passenger compartment (4) of a motor vehicle (1); and
- the device according to claim 11 or 12.

14. Computer program product that contains a computer program that, if this is run, undertakes all the steps of a process according to one of claims 1 to 10.

## Revendications

1. Procédé de sélection d'une ou plusieurs sources de chaleur (3, 6, 8) parmi un certain nombre de sources de chaleur (3, 6, 8) pour chauffer l'air dans l'habitacle (4) d'un véhicule à moteur (1), dans lequel les étapes suivantes sont effectuées dans un état de système de chauffage :
- sélection automatique d'une ou plusieurs sources de chaleur à activer (3, 6, 8), s'il est constaté qu'il existe un besoin de chauffage; et
- activation d'une ou plusieurs sources de chaleur sélectionnées (3, 6, 8),
dans lequel la source de chaleur (3, 6, 8) est sélectionnée en fonction d'un besoin de chaleur,
le besoin de chaleur résultant de la différence de température entre une
température souhaitée et une température réelle dans l'habitacle (4), **caractérisé en ce que** :
le besoin de chaleur
est déterminé en fonction de l'apport d'énergie thermique supplémentaire lié aux conditions météorologiques qui se produira au cours du trajet.

2. Procédé selon la revendication 1, dans lequel la ou les sources de chaleur (3, 6, 8) à activer sont sélectionnées parmi un chauffage électrique (8), un chauffage de carburant (6) ou l'utilisation de la chaleur résiduelle d'un moteur d'entraînement (3) du véhicule à moteur (1).

3. Procédé selon la revendication 1 ou 2, dans lequel la sélection automatique est effectuée en se basant sur les paramètres utilisateur et/ou les paramètres environnementaux et/ou les paramètres du véhicule.

4. Procédé selon la revendication 3, dans lequel les paramètres environnementaux comprennent un ou plusieurs des paramètres suivants :
- une température extérieure;
- une exposition aux rayons du soleil;
- une position du véhicule;
- une distance jusqu'à un lieu de destination;
- une distance à la prochaine station-service ou station de recharge; et

5. Procédé selon la revendication 3 ou 4, dans lequel les paramètres du véhicule comprennent un ou plusieurs des paramètres suivants :
- une température de liquide de refroidissement du moteur à combustion interne (3);
- une température intérieure de l'air de l'habitacle (4);
- une capacité résiduelle d'un dispositif de stockage d'énergie électrique (7);
- un niveau de réservoir d'un réservoir de carburant (5);
- un état de charge indiquant si une charge est en cours;
- une vitesse de véhicule; et
- un profil de déplacement.

6. Procédé selon l'une quelconque des revendications 3 à 5, dans lequel les paramètres utilisateurs comprennent un ou plusieurs des paramètres suivants :
- une préférence de l'utilisateur des sources de chaleur à utiliser (3, 6, 8);
- une interdiction définie par l'utilisateur d'utiliser une source de chaleur (3, 6, 8) afin que celle-ci ne soit pas prise en compte lors de la sélection automatique;
- une spécification d'une durée de fonctionnement maximale d'une ou plusieurs des sources de chaleur (3, 6, 8); et
- une indication des règles d'utilisation.

7. Procédé selon l'une quelconque des revendications 1 à 6, dans lequel la ou les sources de chaleur (3, 6,8) sont sélectionnées en fonction des capacités du dispositif de stockage de l'énergie électrique (5, 7) alimentant les sources de chaleur (3, 6, 8).

8. Procédé selon l'une quelconque des revendications 1 à 7, dans lequel un chauffage électrique (8) est sélectionné comme source de chaleur (3, 6, 8) s'il est constaté qu'un dispositif de stockage de l'énergie électrique (7) alimentant le chauffage électrique est chargé dans un intervalle de temps prédéterminé.

9. Procédé selon l'une quelconque des revendications 1 à 8, dans lequel la source de chaleur (3, 6, 8) est sélectionnée en fonction de la hauteur du besoin de chaleur.

10. Procédé selon l'une quelconque des revendications 1 à 9, dans lequel un utilisateur dispose d'une option d'entrée pour que l'utilisateur puisse choisir entre le premier état du système de chauffage et un ou plusieurs seconds états du système de chauffage, les seconds états du système de chauffage déterminant chacun une ou plusieurs sources de chaleur à activer.

11. Dispositif, en particulier une première unité de calcul, de sélection d'une ou plusieurs sources de chaleur (3, 6, 8) parmi un certain nombre de sources de chaleur (3, 6, 8) pour chauffer l'air dans l'habitacle (4) d'un véhicule à moteur (1), dans lequel le dispositif est configuré pour sélectionner automatiquement,
- selon un premier état du système de chauffage, une ou plusieurs sources de chaleur à activer (3, 6, 8) s'il est constaté qu'il existe un besoin de chauffage; et
- activer une ou plusieurs sources de chaleur (3, 6, 8) sélectionnées,
dans lequelle dispositif est en outre configuré pour sélectionner la source de chaleur (3, 6, 8) en fonction
d'un besoin de chaleur, le besoin en chaleur résultant de la différence de température entre la température souhaitée et une température réelle dans l'habitacle (4), **caractérisé en ce que** :
le besoin de chaleur
est déterminé en fonction de l'apport d'énergie thermique supplémentaire lié aux conditions météorologiques au cours du trajet.

12. Dispositif selon la revendication 11, dans lequel une unité d'entrée/sortie est prévue (11) afin de fournir à un utilisateur une option d'entrée pour sélectionner le premier état du système de chauffage et un ou plusieurs seconds états du système de chauffage, les seconds état du système de chauffage indiquant chacun une ou plusieurs sources de chaleur (3 , 6, 8) à activer, où les options d'entrée comprennent :
- les premiers et seconds éléments de commande (21) affectés au premier état de système de chauffage et à un ou plusieurs seconds états de système de chauffage afin de les activer ou de les désactiver chacun par actionnement correspondant; ou
- un troisième élément de commande (31) pour commuter entre les états du système de chauffage par actionnement; ou
- un actionneur rotatif comme élément de commande pour sélectionner parmi les états du système de chauffage en fonction de sa position.

13. Système de chauffage pour l'habitacle (4) d'un véhicule à moteur (1), comprenant :
- plusieurs sources de chaleur (3, 6,8) pour réchauffer l'air dans l'habitacle (4) d'un véhicule à moteur (1); et
- le dispositif selon la revendication 11 ou 12.

14. Produit de programme informatique qui contient un programme informatique qui, une fois exécuté, exécute toutes les étapes d'un procédé selon l'une quelconque des revendications 1 à 10.
